# EUROPÄISCHE PATENTANMELDUNG

(11) **EP 1 098 085 A2**
(43) Veröffentlichungstag der Anmeldung: **09.05.2001**
(21) Anmeldenummer: 00116985.3
(22) Anmeldetag: 08.08.2000
(51) Int. Cl.: F02M 25/07

(54) **Rückschlagventil für eine Abgasrückführleitung**

(30) Priorität: 05.11.1999 DE 19953198
(71) Anmelder: Pierburg Aktiengesellschaft, 41460 Neuss (DE)
(72) Erfinder: Benra, Michael, 58456 Witten (DE); Lappan, Rolf, 50670 Köln (DE); Mikliss, Stefan, 41564 Kaarst (DE); Röttges, Riedel, 47918 Tönisvorst (DE)
(74) Vertreter: Ter Smitten, Hans

(57) **Zusammenfassung**

Rückschlagventil für eine Abgasrückführleitung, bestehend aus einem Ventilkörper, der zumindest eine Ventilsitzfläche aufweist, der ein auf einer Einspannfläche angeordnetes Blattfederelement mit einem Gegenhalter zugeordnet sind, wobei die Ventilsitzfläche (5) eine Beschichtung (10) aus einem thermisch belastbaren Elastomer, wie zum Beispiel Fluorkautschuk aufweist.

## Beschreibung

Die Erfindung betrifft ein Rückschlagventil für eine Abgasrückführleitung, bestehend aus einem Ventilkörper, der zumindest eine Ventilsitzfläche aufweist, der ein auf einer Einspannfläche angeordnetes Blattfederelement mit einem Gegenhalter zugeordnet sind.

Ein derartiges Rückschlagventil ist beispielsweise aus der EP 0 840 000 A1 bekannt. Dabei soll ein derartiges Rückschlagventil verhindern, daß Abgas zu Brennkraftmaschinen zurückgeleitet wird, wenn der Druck in der Ladeluftleitung größer als der Druck in der Abgasrückführleitung ist. Damit das Rückschlagventil bei den auftretenden Abgasdruckspitzen schlagartig geöffnet und bei einem Ladeluftdruck der größer ist als der mittlere Abgasdruck schnell geschlossen werden kann, ist das bekannte Rückschlagventil als Flatterventil mit einem Blattfederelement ausgeführt. Dabei stellt es sich jedoch als schwierig dar, das Blattfederelement in einem so kurzen Zeitabschnitt absolut gasdicht auf der Ventilsitzfläche anliegen zu lassen.

Daher liegt der Erfindung die Aufgabe zugrunde, ein Rückschlagventil für eine Abgasrückführleitung zu schaffen, bei dem auf einfache und kostengünstige Art und Weise ein gasdichtes Anliegen des Blattfederelementes auf der Ventilsitzfläche unter den oben genannten Umständen gewährleistet ist.

Diese Aufgabe ist bei einem gattungsgemäßen Rückschlagventil durch die im Kennzeichen des Patentanspruchs 1 angegebenen Merkmale gelöst.

Vorteilhafte Weiterbildungen der Erfindung sind in den Unteransprüchen genannt.

Ausführungsbeispiele der Erfindung sind in der Zeichnung dargestellt und werden nachfolgend beschrieben.

Diese zeigt:
- **Fig. 1**: ein vierflutiges Rückschlagventil in einer perspektivischen Ansicht,
- **Fig. 2**: das Rückschlagventil aus Fig. 1 im Teilschnitt,
- **Fig. 3**: ein zwölfflutiges Rückschlagventil, und
- **Fig. 4**: ein vierflutiges Rückschlagventil in einer alternativen Ausführungsform.

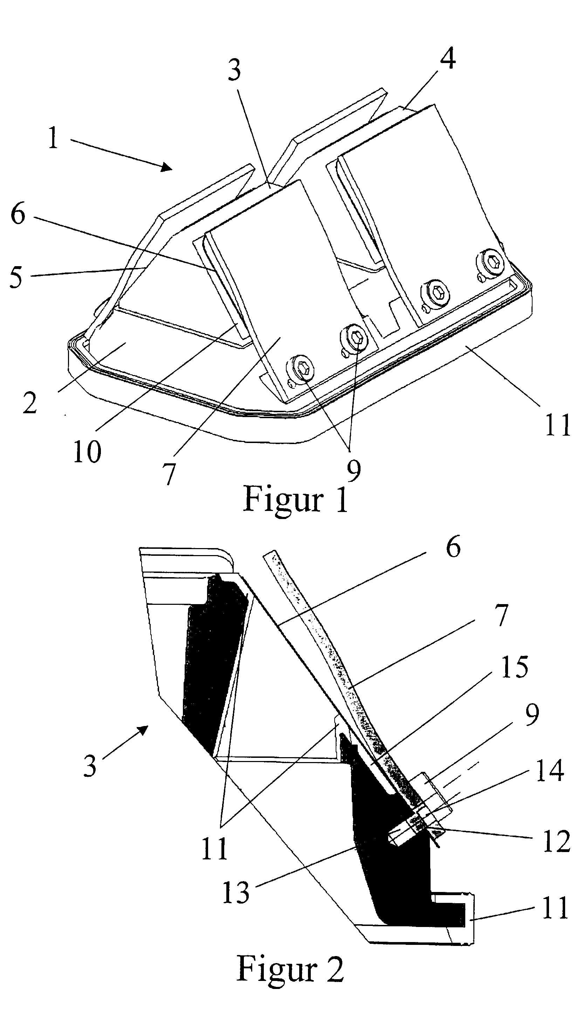

Fig. 1 zeigt in perspektivischer Ansicht ein erfindungsgemäßes vierflutiges Rückschlagventil 1. Ein Ventilkörper 2 weist dabei zwei obeliskförmige Elemente 3, 4 auf, deren Seitenflächen Ventilsitzflächen 5 bilden. Jede Ventilsitzfläche 5 ist ein Blattfederelement 6 und ein Gegenhalter 7 zugeordnet. Desweiteren weist der Ventilkörper Einspannflächen 8 auf, auf denen die Blattfedern 6 und die Gegenhalter 7 mittels Schrauben 9 befestigt werden. Jede Ventilsitzfläche 5 weist eine Beschichtung 10 aus einem thermisch belastbaren Elastomer, wie zum Beispiel Fluorkautschuk auf. Auf diese Weise wird gewährleistet, daß das Blattfederelement 6 bei seiner schlagartigen Schließbewegung direkt die Ventilsitzfläche abdichtet und der Aufschlag gedämpft wird. Der im vorliegenden Ausführungsbeispiel verwendete Fluorkautschuk ist thermisch in etwa bis 250°C belastbar und darüber hinaus medienbeständig für aggressive Stoffe. Die Beschichtung 10 sollte eine Dicke von 1,4 mm nicht überschreiten. Desweiteren weist der Ventilkörper 2 einen umlaufenden Gummiring 11 auf, der einerseits eine Dichtwirkung zwischen einer nicht dargestellten Abgasrückführleitung und den Ventilkörper 2 gewährleistet und andererseits den Ventilkörper 2 dämpfend in der Abgasrückführleitung lagert.

Fig. 2 zeigt das Rückschlagventil aus Fig. 2 im Schnitt. Deutlich zu sehen ist die Beschichtung 11 aus Fluorkautschuk, auf der das Blattfederelement 6 gasdicht aufliegt. Die Einspannfläche 8 sowie das Blattfederelement 6 weisen jeweils eine Öffnung 12, 13 auf, in die eine Zentriernase 14 des Gegenhalters eingreift. Auf diese Weise wird gewährleistet, daß Ventilsitzfläche 5 und Blattfederelement 6 und Gegenhalter 7 auf optimale Weise zusammenwirken. Desweiteren ist zwischen der Ventilsitzfläche 5 und der Einspannfläche 8 ein Freigang 15 vorgesehen, der gewährleistet, daß Schmutzpartikel aus dem Abgas sich nicht zwischen der Blattfeder 6 und der Einspannfläche 8 festsetzen können und somit den Einspannwinkel der Blattfeder 6 beeinflussen können.

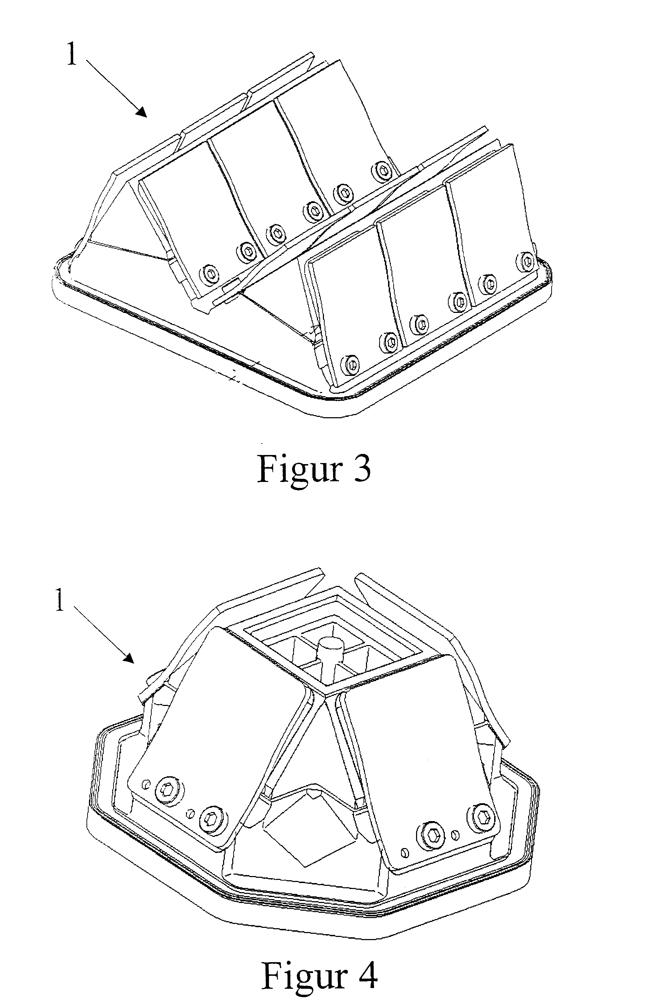

Die Fig. 3 und 4 zeigen alternative Ausbildungsformen des Ventilkörpers 1, die dort beide die erfindungsgemäßen Merkmale aufweisen. So zeigt Fig. 3 ein zwölfflutiges Rückschlagventil 1, bei dem die Ventilsitzflächen 5 wiederum auf den Seitenflächen von obeliskförmigen Elementen angebracht sind, und Fig. 4 zeigt ein Rückschlagventil, wobei der Ventilkörper 2 als Pyramidenstumpf ausgeführt ist, auf dessen Seitenflächen sich die Ventilsitzflächen 5 befinden.

Es sollte deutlich sein, daß auch noch weitere Formen und Ausführungen hinsichtlich der Geometriegestaltung des Ventilkörpers möglich sind.

## Patentansprüche

1. Rückschlagventil für eine Abgasrückführleitung, bestehend aus einem Ventilkörper, der zumindest eine Ventilsitzfläche aufweist, der ein auf einer Einspannfläche angeordnetes Blattfederelement mit einem Gegenhalter zugeordnet sind, **dadurch gekennzeichnet,** daß die Ventilsitzfläche (5) eine Beschichtung (10) aus einem thermisch belastbaren Elastomer, wie zum Beispiel Fluorkautschuk aufweist.

2. Rückschlagventil nach Anspruch 1, **dadurch gekennzeichnet**, daß der Ventilkörper (2) einen umlaufenden Gummiring (11) aufweist, der einerseits eine Dichtwirkung zwischen Abgasrückführleitung und Ventilkörper (2) gewährleistet und andererseits den Ventilkörper (2) dämpfend in der Abgasrückführleitung lagert.

3. Rückschlagventil nach Anspruch 1 oder 2, **dadurch gekennzeichnet**, daß zwischen der Ventilsitzfläche (5) und der Einspannfläche (8) ein Freigang (15) vorgesehen ist.

4. Rückschlagventil nach einem der vorhergehenden Ansprüche, **dadurch gekennzeichnet**, daß sowohl die Einspannfläche (8) als auch das Blattfederelement (6) eine Zentrieröffnung (13) aufweisen, die mit einer Zentriernase (14) des Gegenhalters (7) zusammenwirken.
